# FASCICULE DE BREVET EUROPEEN

(11) **EP 3 856 617 B1**
(45) Date de publication et mention de la délivrance du brevet: **26.07.2023**
(21) Numéro de dépôt: 19779535.4
(22) Date de dépôt: 29.08.2019
(51) Int. Cl.: B62D 21/15, B62D 25/08

(54) **RENFORT BATTERIES POUR CHOC ARRIERE GRANDE VITESSE**
BATTERIEVERSTÄRKUNG FÜR EINEN HECKAUFPRALL BEI HOHER GESCHWINDIGKEIT
BATTERY REINFORCEMENT FOR HIGH-SPEED REAR-END COLLISION

(30) Priorité: 28.09.2018 FR 1858993
(43) Date de publication de la demande: 04.08.2021
(73) Titulaire: PSA Automobiles SA, 78300 Poissy (FR)
(72) Inventeur: GROSSET, Romain, 94230 Cachan (FR)
(86) Numéro de dépôt international: PCT/FR2019/051995
(87) Numéro de publication internationale: WO 2020/065153

(56) Documents cités:
- EP-A1- 3 141 435
- WO-A1-2018/007718
- GB-A- 2 306 922
- US-A1- 2012 248 825

## Description

L'invention a trait au domaine des véhicules automobiles, plus particulièrement à la structure d'un véhicule automobile, et encore plus particulièrement à l'unité arrière d'un véhicule automobile.

La partie arrière d'un véhicule automobile comprend un plancher d'habitacle depuis lequel s'étendent vers l'arrière deux poutres longitudinales couramment appelées longeronnets, et qui soutiennent un plancher arrière. Lors de chocs arrière, il est essentiel que cette partie arrière ou unité arrière résiste aux fortes contraintes, notamment aux chocs à grande vitesse, en se déformant le moins possible. Ceci est d'autant plus important pour les véhicules hybrides ou électriques où la ou au moins une des batteries de traction est généralement installée dans cette partie, car ce type de batterie est lourd et sujet en cas de choc arrière à des décrochages qui peuvent poser de graves problèmes de sécurité. Dans ce contexte de prévention des chocs arrière, il existe en réalité une forte diversité structurelle entre les unités arrière des véhicules thermiques et les véhicules hybrides ou électriques, en particulier au niveau des longeronnets, et cette diversité ne peut pas être actuellement palliée seulement par la reconduction d'une unité arrière thermique par ajout d'un renforcement dédié à la présence de batterie(s) de traction. Voir par example WO 2018/007718 A1.

L'invention a pour objectif de pallier au moins un des inconvénients de l'état de la technique susmentionné. Plus particulièrement, l'invention a pour objectif de rendre les unités arrière des véhicules thermiques plus résistantes aux chocs à grande vitesse pour permettre notamment la mise en place de batterie(s) de traction dans ces unités et limiter ainsi la diversité structurelle des parties arrière entre les véhicules thermiques et les véhicules électriques ou hybrides.

A cet effet, l'invention a pour objet un véhicule automobile, comprenant deux poutres longitudinales arrière s'étendant vers l'arrière depuis un plancher d'habitacle dudit véhicule, chacune desdites poutres présentant une section principale creuse; remarquable en ce que le véhicule comprend, en outre, un profilé de renfort fixé dans la section creuse de chacune des deux poutres longitudinales arrière.

Selon un mode avantageux de l'invention, chacun des profilés de renfort forme, avec la poutre longitudinale arrière sur laquelle ledit profilé est fixé, une section auxiliaire creuse et fermée.

Selon un mode avantageux de l'invention, la section principale de chacune des poutres longitudinales arrière présente une hauteur moyenne et une largeur moyenne, la section auxiliaire formée par chacun des profilés de renfort présente une hauteur moyenne et/ou une largeur moyenne inférieure à la hauteur moyenne et la largeur moyenne de ladite section principale, respectivement.

Selon un mode avantageux de l'invention, la hauteur moyenne et/ou la largeur moyenne de chacune des sections auxiliaires est inférieure à 50% de la hauteur moyenne et de la largeur moyenne de la section principale correspondante, respectivement.

Selon un mode avantageux de l'invention, la section principale de chacune des poutres longitudinales arrière est en forme de U et chacun des profilés de renfort est un embouti présentant une section en forme d'équerre avec, à chaque extrémité de ladite équerre, une aile de fixation à la poutre longitudinale arrière correspondante. Avantageusement, chacune des ailes de fixation forme un angle avec la portion de l'équerre directement adjacente, cet angle pouvant être compris entre 70° et 110°.

Selon un mode avantageux de l'invention, pour chacun des profilés de renfort, une des deux ailes est fixée contre une face latérale de la section principale de la poutre longitudinale arrière et l'autre des deux ailes est fixée contre une face inférieure de ladite section principale.

Selon un mode avantageux de l'invention, chacun des profilés de renfort présente sur une portion correspondant à un tiers arrière de la longueur dudit profilé des amorces d'effondrement en cas de choc à l'arrière du véhicule.

Selon un mode avantageux de l'invention, pour chacun des profilés de renfort les amorces d'effondrement sont réparties longitudinalement le long de la portion de tiers arrière.

Selon un mode avantageux de l'invention, les amorces d'effondrement comprennent des enfoncements transversaux à cheval sur l'arête du profil en équerre des profilés de renfort et/ou des nervures transversales entre une des ailes et le profil en équerre adjacent des profilés de renfort.

Selon un mode avantageux de l'invention, le véhicule comprend, en outre, des batteries de traction disposées sur les deux poutres longitudinales arrière, à l'avant des portions de tiers arrière des profilés de renfort.

Les mesures de l'invention sont intéressantes en ce que les profilés de renfort ont une configuration qui permet leur insertion et leur fixation dans la section principale creuse de chacune des deux poutres longitudinales arrière des véhicules thermiques. Cette insertion a pour effet de permettre de renforcer et de maîtriser la compression des poutres longitudinales arrière en cas de chocs arrière à grande vitesse, mais aussi de favoriser la mise en place et la protection optimales de batteries de traction dans les unités arrière des véhicules thermiques. Cette invention est d'autant plus intéressante que ces profilés de renfort peuvent également être installés dans les poutres longitudinales des véhicules hybrides ou électriques. En ce sens, cette invention permet donc de réduire la diversité des unités arrière entre les véhicules thermiques et les véhicules électriques ou hybrides, de manière simple et économique.

D'autres caractéristiques et avantages de la présente invention seront mieux compris à l'aide de la description et des dessins parmi lesquels :
- La figure 1 est une vue en perspective et partielle d'une partie arrière d'un véhicule automobile au niveau d'une poutre longitudinale dans laquelle est installé un profilé de renfort, conformément à l'invention ;
- La figure 2 est une vue en perspective d'une portion de la poutre longitudinale de la figure 1 avec une portion du profilé de renfort selon l'invention ;
- La figure 3 est une autre vue en perspective de la poutre longitudinale de la figure 1 avec le profilé de renfort, conformément à l'invention ;
- La figure 4 est une vue de dessus du profilé de renfort illustré sur les figure 1, 2 et 3, dans le contexte de la mise en place de batterie(s) de traction.

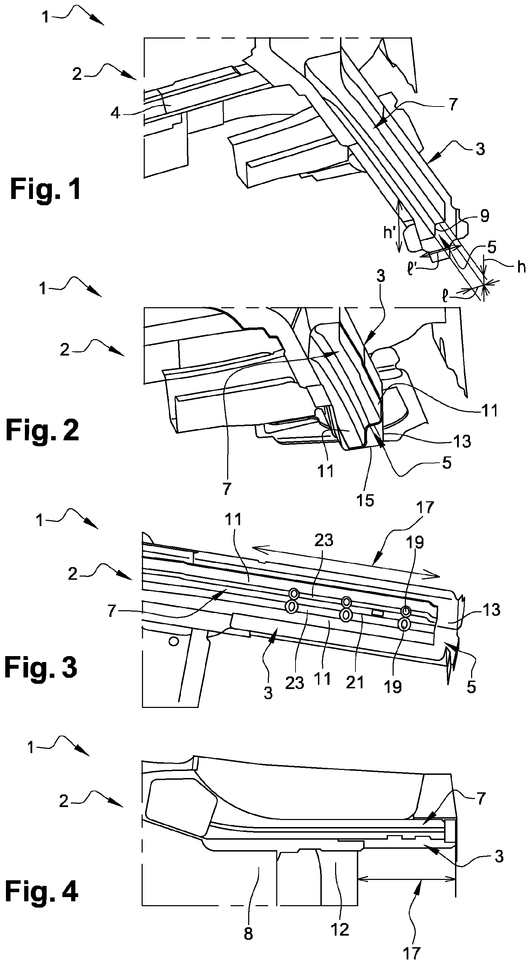

La figure 1 illustre une vue en perspective et partielle d'une unité arrière 2 d'un véhicule automobile 1 au niveau d'une poutre longitudinale arrière 3 ayant un profilé de renfort 7 selon l'invention. En l'occurrence la poutre longitudinale arrière 3 représentée sur la figure 1 est la poutre située du côté arrière droit du véhicule. Cette poutre longitudinale arrière 3 s'étend vers l'arrière depuis un plancher d'habitacle et soutient un plancher arrière, lesquels planchers sont séparés par la traverse arrière 4. Pour des raisons de clarté, sur la figure 1 le plancher d'habitacle et le plancher arrière ne sont pas représentés, seule est mise en évidence la traverse arrière 4 et la poutre longitudinale arrière droite 3. Cette poutre longitudinale arrière 3 est en fait un profilé qui présente une section principale creuse 5 en forme de U à l'intérieur de laquelle est fixé un profilé de renfort 7. Lequel profilé de renfort 7 est un embouti qui forme également avec la poutre longitudinale arrière 3 une section auxiliaire creuse et fermée 9.

Comme illustré sur la figure 1, la section auxiliaire creuse 9 du profilé de renfort 7 présente une hauteur (h) moyenne et/ou une largeur (ℓ) moyenne qui est inférieure à la hauteur moyenne (h') et la largeur moyenne (ℓ') de la section principale 5 de la poutre longitudinale arrière 3.

Avantageusement, la hauteur (h) moyenne et/ou la largeur (ℓ) moyenne du profilé de renfort 7 est en fait inférieure à 50% de la hauteur (h') moyenne et de la largeur (ℓ) moyenne de la section principale 5 de la poutre longitudinale 3.

Selon le mode préféré de réalisation de cette invention, illustré à la figure 1, le profilé de renfort 7 présente une section en forme d'équerre.

La figure 2 montre plus particulièrement une vue en perspective d'une portion de la poutre longitudinale arrière droite 3 de la figure 1 avec une portion du profilé de renfort 7 selon l'invention. Cette figure permet clairement d'observer que la section en forme d'équerre du profilé de renfort 7 présente à chacune de ses extrémités une aile de fixation 11 à la poutre longitudinale arrière 3. Une des deux ailes de fixation 11 est notamment fixée contre une face latérale 13 de la section principale 5 de la poutre longitudinale arrière 3, et l'autre aile 11 est, quant à elle, fixée contre une face inférieure 15 de la même poutre longitudinale arrière 3.

La figure 3 est une autre vue en perspective de la poutre longitudinale 3 de la figure 1 avec le profilé de renfort 7 selon l'invention. Sur cette figure, il est possible de voir que la portion 17 du profilé de renfort 7 située à un tiers arrière de la longueur du profilé comprend des amorces d'effondrement 19. Ces amorces 19 sont en particulier réparties longitudinalement le long de cette portion 17 arrière du profilé de renfort 7. Elles sont constituées, avantageusement d'enfoncements transversaux qui sont à cheval sur l'arête 21 du profil en équerre du profilé de renfort 7 et/ou des nervures transversales 23 situées entre une des ailes 11 et le profil en équerre adjacent du profilé de renfort 7. En l'occurrence, sur la figure 3 six amorces d'effondrements 19 sont visibles, trois étant localisées longitudinalement sur l'arête 21 du profil en équerre du profilé de renfort 7 et trois étant positionnées à cheval sur la nervure transversale 23 située à proximité de l'aile de fixation 11 fixée contre la face latérale 13 de la section principale 5 de la poutre longitudinale arrière 3.

De façon générale, la section creuse et fermée 9 du profilé de renfort 7 en forme d'équerre selon l'invention, permet donc de renforcer la section principale creuse 5 de la poutre longitudinale arrière droite 3. Parallèlement à cette configuration en équerre, l'ensemble des amorces d'effondrement 19 présent sur la portion 17 de tiers arrière du profilé de renfort 7 agit comme une « crash box » en permettant au profilé 7 de se déformer en compression (par bottelage) sans flamber et ainsi d'absorber l'énergie d'un choc arrière à grande vitesse contre la partie arrière 2 du véhicule automobile 1.

La figure 4 est en fait une vue de dessus du profilé de renfort 7 de la figure 1 dans le contexte de la mise en place de batterie(s) de traction. Avantageusement, des batteries de traction peuvent être disposées dans la partie arrière 2 d'un véhicule 1 sur les deux poutres longitudinales arrière 3 munies chacune d'un profilé de renfort 7 selon l'invention. Le positionnement et la fixation des batteries se fait en particulier à l'avant des portions 17 de tiers arrière des profilés de renfort 7, à savoir à l'avant des amorces d'effondrement 19 (visibles sur la figure 3), sur une zone en principe délimitée par le bord arrière du plancher arrière 8 et une traverse arrière auxiliaire 12.

L'avantage de cette invention réside aussi dans le fait en ce qu'elle peut être transposée aussi bien sur les véhicules thermiques que sur les véhicules électriques ou hybrides, limitant ainsi la diversité des unités arrière des véhicules automobiles.

Il est bien entendu évident que tout ce qui vient d'être décrit pour la poutre longitudinale arrière droite est valable pour la poutre longitudinale arrière gauche d'une unité arrière d'un véhicule automobile.

## Revendications

1. Véhicule automobile (1), comprenant deux poutres longitudinales arrière (3) s'étendant vers l'arrière depuis un plancher d'habitacle dudit véhicule (1), chacune desdites poutres (3) présentant une section principale creuse (5); **caractérisé en ce que** véhicule (1) comprend, en outre :
un profilé de renfort (7) fixé dans la section creuse (5) de chacune des deux poutres longitudinales arrière (3).

2. Véhicule selon la revendication 1, **caractérisé en ce que** chacun des profilés de renfort (7) forme, avec la poutre longitudinale arrière (3) sur laquelle ledit profilé (7) est fixé, une section auxiliaire creuse et fermée (9).

3. Véhicule (1) selon la revendication 2, **caractérisé en ce que** la section principale (5) de chacune des poutres longitudinales arrière (3) présente une hauteur moyenne (h') et une largeur moyenne (f'), la section auxiliaire (9) formée par chacun des profilés de renfort (7) présente une hauteur moyenne (h) et/ou une largeur moyenne (f) inférieure à la hauteur moyenne (h') et la largeur moyenne (ℓ') de ladite section principale (5), respectivement.

4. Véhicule (1) selon la revendication 3, **caractérisé en ce que** la hauteur moyenne (h) et/ou la largeur moyenne (ℓ) de chacune des sections auxiliaires (9) est inférieure à 50% de la hauteur moyenne (h') et de la largeur moyenne (ℓ') de la section principale (5) correspondante, respectivement.

5. Véhicule (1) selon l'une des revendications 1 à 4, **caractérisé en ce que** la section principale (5) de chacune des poutres longitudinales arrière (3) est en forme de U et chacun des profilés de renfort (7) est un embouti présentant une section (9) en forme d'équerre avec, à chaque extrémité de ladite équerre, une aile de fixation (11) à la poutre longitudinale arrière (3) correspondante.

6. Véhicule (1) selon la revendication 5, **caractérisé en ce que** pour chacun des profilés de renfort (7), une des deux ailes (11) est fixée contre une face latérale (13) de la section principale (5) de la poutre longitudinale arrière (3) et l'autre des deux ailes (11) est fixée contre une face inférieure (15) de ladite section principale (5).

7. Véhicule (1) selon l'une des revendications 1 à 6, **caractérisé en ce que** chacun des profilés de renfort (7) présente sur une portion (17) correspondant à un tiers arrière de la longueur dudit profilé (7) des amorces d'effondrement (19) en cas de choc à l'arrière du véhicule (1).

8. Véhicule (1) selon la revendication 7, **caractérisé en ce que** pour chacun des profilés de renfort (7) les amorces d'effondrement (19) sont réparties longitudinalement le long de la portion (17) de tiers arrière.

9. Véhicule (1) selon l'une des revendications 5 et 6, et selon l'une des revendications 7 et 8, **caractérisé en ce que** les amorces d'effondrement (19) comprennent des enfoncements transversaux à cheval sur l'arête (21) du profil en équerre des profilés de renfort (7) et/ou des nervures transversales (23) entre une des ailes (11) et le profil en équerre adjacent des profilés de renfort (7).

10. Véhicule (1) selon l'une des revendications 7 à 9, **caractérisé en ce que** ledit véhicule (1) comprend, en outre, des batteries de traction disposées sur les deux poutres longitudinales arrière (3), à l'avant des portions (17) de tiers arrière des profilés de renfort (7).

## Patentansprüche

1. Kraftfahrzeug (1) mit zwei hinteren Längsbalken (3), die sich von einem Innenraumboden des Fahrzeugs (1) nach hinten erstrecken, wobei jeder der Balken (3) einen hohlen Hauptabschnitt (5) aufweist;
**dadurch gekennzeichnet, dass** das Fahrzeug (1) ferner umfasst:
ein im Hohlabschnitt (5) jedes der beiden hinteren Längsbalken (3) befestigtes Verstärkungsprofil (7).

2. Fahrzeug nach Anspruch 1, **dadurch gekennzeichnet, dass** jedes der Verstärkungsprofile (7) mit dem hinteren Längsbalken (3), an dem das Profil (7) befestigt ist, einen hohlen und geschlossenen Hilfsabschnitt (9) bildet.

3. Fahrzeug (1) nach Anspruch 2, **dadurch gekennzeichnet, dass** der Hauptabschnitt (5) jedes der hinteren Längsbalken (3) eine mittlere Höhe (h') und eine mittlere Breite (l') aufweist, wobei der durch jedes der Verstärkungsprofile (7) gebildete Hilfsabschnitt (9) eine mittlere Höhe (h) und/oder eine mittlere Breite (l') aufweist, die kleiner als die mittlere Höhe (h') bzw. die mittlere Breite (l') des Hauptabschnitts (5) ist.

4. Fahrzeug (1) nach Anspruch 3, **dadurch gekennzeichnet, dass** die mittlere Höhe (h) und/oder die mittlere Breite (ℓ) jedes der Hilfsabschnitte (9) weniger als 50% der mittleren Höhe (h') bzw. der mittleren Breite (ℓ') des entsprechenden Hauptabschnitts (5) beträgt.

5. Fahrzeug (1) nach einem der Ansprüche 1 bis 4, **dadurch gekennzeichnet, dass** der Hauptabschnitt (5) jedes der hinteren Längsträger (3) U-förmig ist und jedes der Verstärkungsprofile (7) eine Ausstanzung ist, die einen Querschnitt (9) in Form eines Winkels aufweist, wobei an jedem Ende des Winkels ein Befestigungsschenkel (11) an dem entsprechenden hinteren Längsträger (3) angebracht ist.

6. Fahrzeug (1) nach Anspruch 5, **dadurch gekennzeichnet, dass** für jedes der Verstärkungsprofile (7) einer der beiden Flügel (11) an einer Seitenfläche (13) des Hauptabschnitts (5) des hinteren Längsträgers (3) befestigt ist und der andere der beiden Flügel (11) an einer Unterseite (15) des Hauptabschnitts (5) befestigt ist.

7. Fahrzeug (1) nach einem der Ansprüche 1 bis 6, **dadurch gekennzeichnet, dass** jedes der Verstärkungsprofile (7) an einem Abschnitt (17), der einem hinteren Drittel der Länge des Profils (7) entspricht, Einsturzvorsprünge (19) im Fall eines Aufpralls auf das Heck des Fahrzeugs (1) aufweist.

8. Fahrzeug (1) nach Anspruch 7, **dadurch gekennzeichnet, dass** für jedes der Verstärkungsprofile (7) die Kollabiervorsprünge (19) längs des hinteren Drittelabschnitts (17) verteilt sind.

9. Fahrzeug (1) nach einem der Ansprüche 5 und 6 und nach einem der Ansprüche 7 und 8, **dadurch gekennzeichnet, dass** die Einsturzansätze (19) Quereindrückungen auf der Kante (21) des Winkelprofils der Verstärkungsprofile (7) und/oder Querrippen (23) zwischen einem der Flügel (11) und dem benachbarten Winkelprofil der Verstärkungsprofile (7) aufweisen.

10. Fahrzeug (1) nach einem der Ansprüche 7 bis 9, **dadurch gekennzeichnet, dass** das Fahrzeug (1) ferner Zugbatterien umfasst, die an den beiden hinteren Längsbalken (3) vor den hinteren Drittelabschnitten (17) der Verstärkungsprofile (7) angeordnet sind.

## Claims

1. Motor vehicle (1), comprising two rear longitudinal beams (3) extending rearwards from a passenger compartment floor of said vehicle (1), each of said beams (3) having a hollow main section (5);
**characterized in that** the vehicle (1) further comprises:
reinforcement profile (7) fixed in the hollow section (5) of each of the two rear longitudinal beams (3).

2. Vehicle according to claim 1, **characterized in that** each of the reinforcing sections (7) forms, with the rear longitudinal beam (3) to which the said section (7) is fixed, a hollow and closed auxiliary section (9).

3. Vehicle (1) according to claim 2, **characterized in that** the main section (5) of each of the rear longitudinal beams (3) has an average height (h') and an average width (ℓ'), the auxiliary section (9) formed by each of the reinforcing profiles (7) has an average height (h) and/or an average width (ℓ) less than the average height (h') and the average width (ℓ') of said main section (5), respectively.

4. Vehicle (1) according to claim 3, **characterized in that** the mean height (h) and/or the mean width (ℓ) of each of the auxiliary sections (9) is less than 50% of the mean height (h') and of the mean width (ℓ') of the corresponding main section (5), respectively.

5. Vehicle (1) according to one of claims 1 to 4, **characterized in that** the main section (5) of each of the rear longitudinal beams (3) is U-shaped and each of the reinforcement profiles (7) is a press-formed piece having a section (9) in the form of a bracket with, at each end of the said bracket, a flange (11) for fixing to the corresponding rear longitudinal beam (3).

6. Vehicle (1) according to claim 5, **characterized in that**, for each of the reinforcement profiles (7), one of the two wings (11) is fixed against a lateral face (13) of the main section (5) of the rear longitudinal beam (3) and the other of the two wings (11) is fixed against a lower face (15) of the said main section (5).

7. Vehicle (1) according to one of claims 1 to 6, **characterized in that** each of the reinforcing bars (7) has, on a portion (17) corresponding to a rear third of the length of the said bar (7), beginnings of collapse (19) in the event of an impact at the rear of the vehicle (1).

8. Vehicle (1) according to claim 7, **characterized in that**, for each of the reinforcement profiles (7), the collapse initiators (19) are distributed longitudinally along the rear third portion (17).

9. Vehicle (1) according to one of claims 5 and 6 and according to one of Claims 7 and 8, **characterized in that** the collapse initiators (19) comprise transverse recesses straddling the edge (21) of the right-angled profile of the reinforcing profiles (7) and/or of the transverse ribs (23) between one of the wings (11) and the adjacent right-angled profile of the reinforcing profiles (7).

10. Vehicle (1) according to one of claims 7 to 9, **characterized in that** the said vehicle (1) further comprises traction batteries arranged on the two rear longitudinal beams (3), at the front of the rear third portions (17) of the reinforcing sections (7).
